# EUROPEAN PATENT APPLICATION

(11) **EP 1 541 410 A1**
(43) Date of publication of application: **15.06.2005**
(21) Application number: 04027919.2
(22) Date of filing: 24.11.2004
(51) Int. Cl.: B60N 3/00, B60N 3/10, B60N 3/08, B60N 2/30, B60R 7/04

(54) **Seat unit**

(30) Priority: 11.12.2003 JP 2003413187; 09.09.2004 JP 2004262224
(71) Applicant: Mazda Motor Corporation, Aki-gun, Hiroshima 730-8670 (JP)
(72) Inventor: Satani, Kenji, Aki-gun Hiroshima 730-8670 (JP); Matsunaga, Masahiro, Aki-gun Hiroshima 730-8670 (JP)
(74) Representative: Müller-Boré & Partner Patentanwälte

(57) **Abstract**

A seat unit includes a seat cushion, a tray compartment located under the seat cushion, a tray which is made storable in the tray compartment, a seat cushion swing mechanism which makes it possible to expose the top side of the tray compartment by swinging up the seat cushion about a support shaft provided at one end of the seat cushion, and a tray support provided on a seat-side member for supporting the tray in such a manner that the tray can be moved between a storage position inside the tray compartment and a service position on one side of the seat cushion after swinging up the seat cushion.

## Description

### BACKGROUND OF THE INVENTION

### 1. Field of the Invention

The present invention relates to a seat unit with a tray table provided on one side of a seat cushion for holding various kinds of articles.

### 2. Description of the Related Art

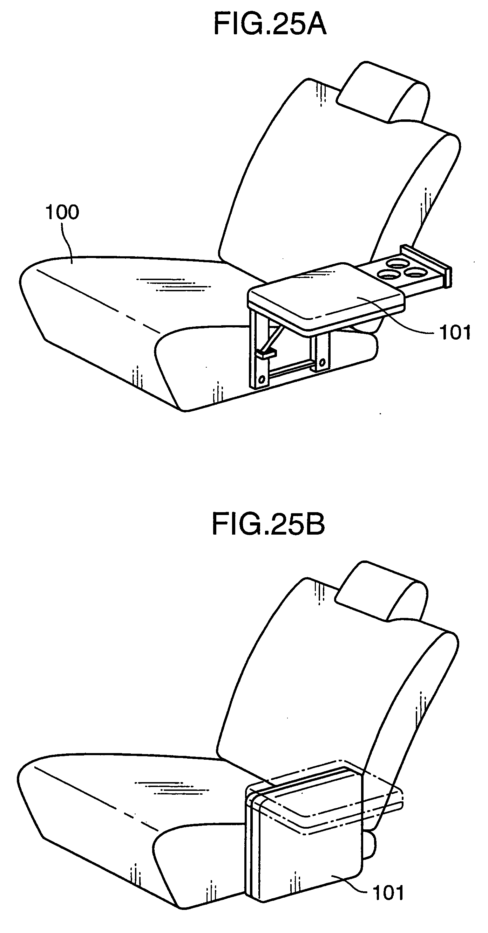

A prior art example of a seat unit of this kind is found in Japanese Unexamined Patent Publication No. 1995-315097, for instance, in which a tray table 101 is provided on one side of a seat cushion 100, on which a vehicle occupant is seated, for holding various articles, and the tray table 101 can be flipped down from a horizontal position shown in FIG. 25A to a vertically hanging storage position shown in FIG. 25B, and vice versa, as necessary.

The aforementioned conventional tray table 101 is disposed on the side of the seat cushion 100 and can be folded down to the storage position to reduce overall width when not in use. This structure of the tray table 101 offers a certain degree of so-called walk-through capability by providing an extra space beside the seat cushion 100 to allow a passenger in a rear seat to move forward. Even when the tray table 101 has been shifted to the storage position, however, the vertically hanging tray table 101 remains on the side of the seat cushion 100, so that the tray table 101 in the storage position inevitably interferes with a moving passenger limiting internal walk-through access. From this point of view, there has been a room for improving the tray table structure.

### SUMMARY OF THE INVENTION

In light of the foregoing, it is an object of the invention to provide a seat unit equipped with a tray table which can be used for holding articles when necessary and can be stored when unnecessary so that the tray table would not interfere with internal walk-through access of a vehicle.

According to the present invention, a seat unit includes a seat cushion, a tray compartment located under the seat cushion, a tray which is made storable in the tray compartment, a seat cushion swing mechanism which makes it possible to expose the top side of the tray compartment by swinging up the seat cushion about a support shaft provided at one end of the seat cushion, and a tray support provided on a seat-side member for supporting the tray in such a manner that the tray can be moved between a storage position inside the tray compartment and a service position on one side of the seat cushion after swinging up the seat cushion.

In this structure, the tray supported by the tray support can be folded out to the service position located on one side of the seat cushion with the top side of the tray compartment exposed by swinging up the seat cushion about the support shaft provided at one end of the seat cushion so that the tray can be used as a platform for holding various articles when necessary. When it is not necessary to use the tray, the tray can be stowed back to the storage position located under the seat cushion so that a free space is created on one side of the seat cushion to provide an improved walk-through capability for passengers.

These and other objects, features and advantages of the invention will become more apparent upon reading the following detailed description along with the accompanying drawings.

### BRIEF DESCRIPTION OF THE DRAWINGS

FIG. 1 is a plan view generally showing the structure of a motor vehicle equipped with a seat unit according to a preferred embodiment of the invention;
FIG. 2 is a perspective view of the seat unit according to the embodiment of the invention;
FIG. 3 is a cross-sectional front view of a principal part of the seat unit of FIG. 2;
FIG. 4 is a plan view showing a specific structure of a tray;
FIG. 5 is a perspective view showing the specific structure of the tray;
FIG. 6 is a cross-sectional front view showing the specific structure of the tray;

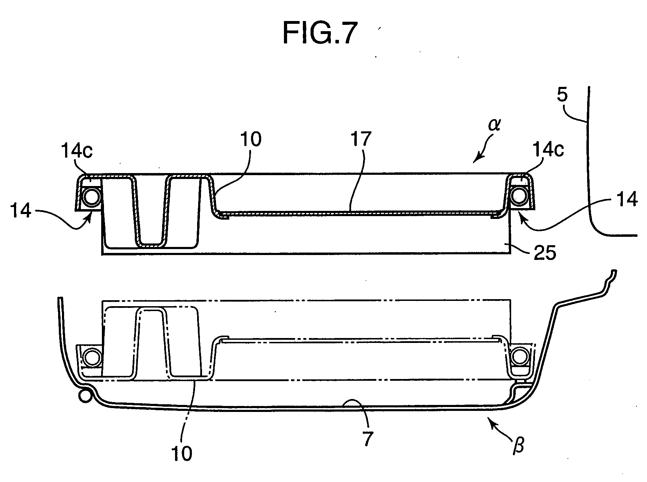

FIG. 7 is a cross-sectional side view of the tray of FIG. 4 set in a service position and a storage position;
FIGS. 8A, 8B and 8C are cross-sectional side views specifically showing the structure of a tray main part;
FIG. 9 is a perspective view showing how a flexible container is attached to the tray;
FIG. 10 is a perspective view showing how more than one flexible containers are attached to the tray;
FIG. 11 is a plan view of a tray according to another form of embodiment of the invention;
FIG. 12 is a cross-sectional side view of the tray of FIG. 11 set in a service position and a storage position;
FIG. 13 is a cross-sectional side view specifically showing the structure of a retainer for holding a cover plate of the tray of FIG. 11;
FIG. 14 is a perspective view showing a varied form of the tray;
FIG. 15 is a side view particularly showing the structure of a supporting tab of a cover plate in the varied form of the tray of FIG. 14;
FIG. 16 is a partially cross-sectional plan view showing the structure of the supporting tab of the cover plate and a tab fitting part formed in a tray main part of the tray of FIG. 14;
FIG. 17 is a cross-sectional side view showing a closed position of the cover plate of the tray of FIG. 14;
FIG. 18 is a cross-sectional side view showing an open position of the cover plate of the tray of FIG. 14;
FIG. 19 is a cross-sectional side view particularly showing the structure of a retainer for holding the cover plate in one variation of the embodiment;
FIG. 20 is a cross-sectional side view particularly showing the structure of fixing parts for fixing the tray main part in one variation of the embodiment;
FIG. 21 is a plan view showing a state in which the tray is set in its service position;
FIG. 22 is a side view showing a state in which the tray is set in its service position;
FIG. 23 is a side view showing a state in which an in-vehicle facility is set in its service position;
FIG. 24 is a cross-sectional front view showing the state in which the in-vehicle facility is set in its service position; and
FIGS. 25A and 25B are perspective views showing a conventional seat unit equipped with a flip-up tray table.

### DETAILED DESCRIPTION OF THE PREFERRED EMBODIMENTS OF THE INVENTION

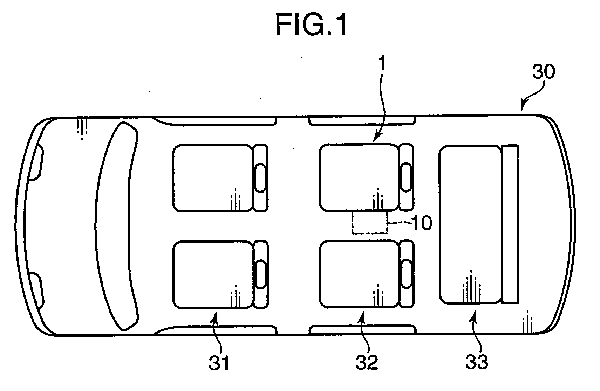

FIG. 1 is a plan view generally showing the structure of a motor vehicle 30 equipped with first-row seats 31 at the front of a passenger compartment, second-row seats 32 located just behind the first-row seats 31, and a third-row seat 33 located just behind the second-row seats 32. While the first-row seats 31 and the second-row seats 32 are pairs of bucket seats separately installed on left and right sides of the first and second rows, respectively, the third-row seat 33 is a single bench-style seat. Among these seats, the second-row bucket seat 32 installed on the right side of the second row is a seat unit 1 according to a preferred embodiment of the invention.

The seat unit 1 of the present embodiment includes a pair of left and right guide rails 2 firmly fixed to a floor of a vehicle body, a pair of left and right slide members 4 supported slidably along the guide rails 2, a seat cushion 3 mounted on the slide members 4 and a backrest 5 supported tiltably about a horizontal shaft (not shown) provided at rear ends of the slide members 4.

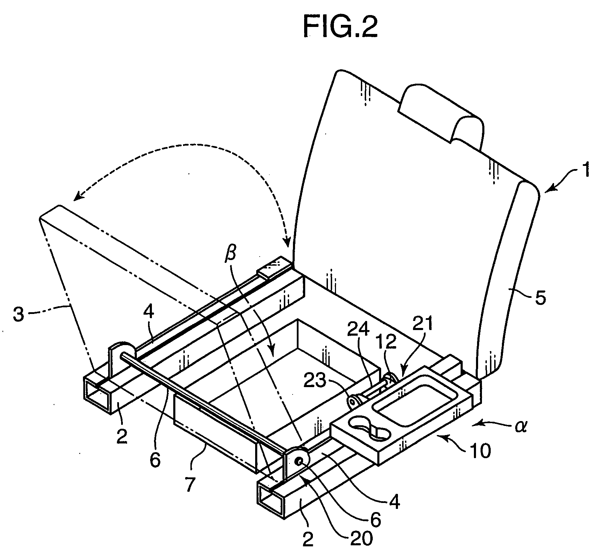

Provided at front ends of the slide members 4 is a horizontally elongate support shaft 6 of a seat cushion swing mechanism 20 by which the seat cushion 3 is swingably supported. More specifically, a cushion frame (not shown) disposed below the seat cushion 3, for instance, is supported by the slide members 4 via the support shaft 6, and as the seat cushion 3 is swung, or lifted, up and down about the support shaft 6, the seat cushion 3 moves between an upright position at which a rear end of the seat cushion 3 is raised as illustrated by imaginary lines in FIG. 2 and a normal seating position at which the seat cushion 3 lies generally horizontally on the slide members 4.

The seat unit 1 is equipped with a tray 10 for holding articles and a tray support 21 for supporting the tray 10. The tray support 21 includes a pair of front and rear brackets 23 attached to an inner side surface of the left-hand slide member 4 which is a seat-equipped mechanical member and a horizontal shaft 24 fitted between upper parts of the two brackets 23, and a later-described supporting frame 12 of the tray 10 is supported by the brackets 23 via the horizontal shaft 24. The tray support 21 is structured such that the tray 10 can be moved between a service position α at which the tray 10 sticks out sideways and a storage position β at which the tray 10 is stored in a tray compartment 7 located beneath the seat cushion 3 by swinging the tray 10 about the horizontal shaft 24 with the seat cushion 3 raised to the upright position as illustrated in FIG. 2.

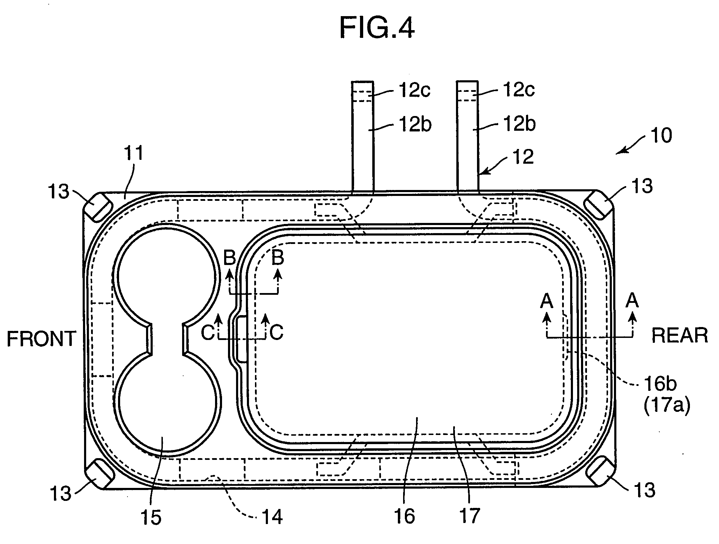

The tray 10 includes a tray main part 11 having a generally rectangular shape in top view made of synthetic resin, for example, and the aforementioned supporting frame 12 attached to the bottom of the tray main part 11. The tray main part 11 has a generally rectangular outer framing portion 14 in which a downward opening groove is made on the bottom side, four hooks 13 extending upward from lower ends of four corners of the outer framing portion 14 and reinforcing ribs 14c formed in the groove in the outer framing portion 14 at specific intervals as shown in FIGS. 4 to 6.

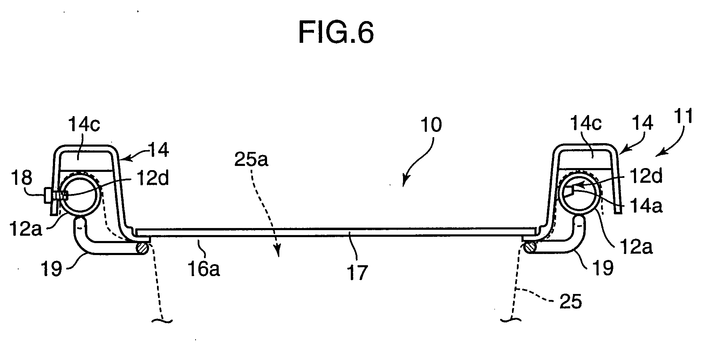

Formed on the inside of the outer framing portion 14 of the tray main part 11 is a recess 15 located on a front side serving as holders for beverage receptacles and a flat portion 16 located on a rear side for holding various articles. The tray main part 11 is shaped such that the flat portion 16 is located at a height lower than a top surface of the outer framing portion 14, forming a flat surface like that of a dish for holding articles. As can be seen from FIG. 6, there is formed a generally rectangular through hole 16a of which size is a little smaller than the flat portion 16 in the tray main part 11, and the flat portion 16 is made by fitting a generally rectangular flat cover plate 17 to cover the through hole 16a. The recess 15 has a pair of left and right cylindrical holes in which lower parts of beverage receptacles are fitted and a joining channel interconnecting the left and right holes.

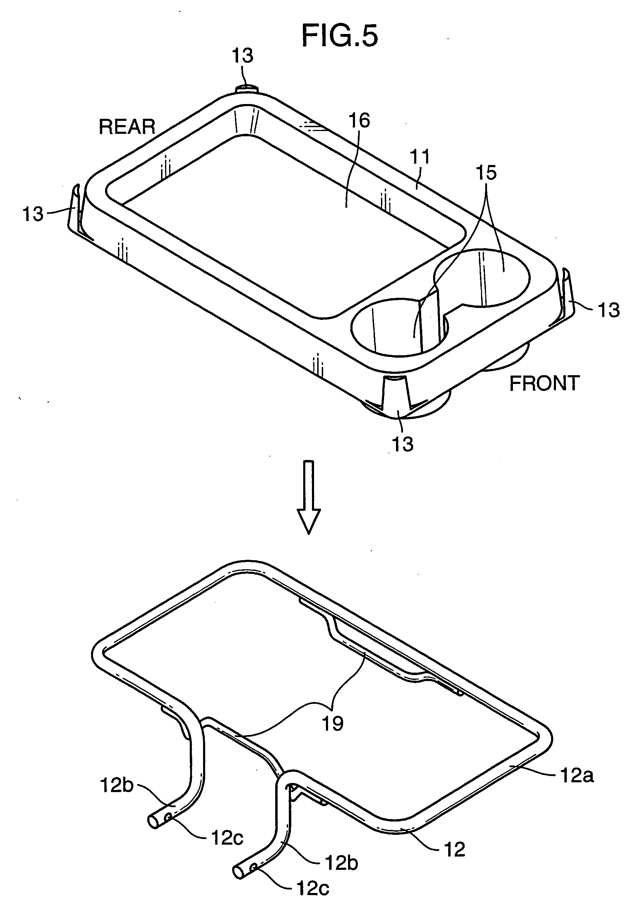

The supporting frame 12 has a main portion 12a which is generally C-shaped in top view and a pair of front and rear arms 12b extending from both ends of the main portion 12a as shown in FIG. 5. The tray main part 11 is structured such that the main portion 12a of the supporting frame 12 can be fitted into the outer framing portion 14 of the tray main part 11 from the bottom side thereof. Each of the arms 12b of the supporting frame 12 has a vertical portion extending downward from one end of the main portion 12a and a horizontally projecting portion extending outward from a bottom end of the vertical portion, and there are formed shaft holes 12c in which the aforementioned horizontal shaft 24 is fitted near extreme ends of the horizontally projecting portions of the arms 12b.

In an inside part of a right-hand hollow straight section of the main portion 12a of the supporting frame 12 as viewed from the front of the vehicle body (FIG. 6), there are formed a plurality of mating holes 12d into which hookup protrusions 14a formed on the outer framing portion 14 of the tray main part 11 are fitted. In an outside part of a left-hand hollow straight section of the main portion 12a of the supporting frame 12 as viewed from the front of the vehicle body (FIG. 6), on the other hand, there are also formed a plurality of mating holes 12d into which fixing bolts 18 are tightened from outside a plurality of through holes formed in the outer framing portion 14 of the tray main part 11. When the main portion 12a of the supporting frame 12 is fitted into the outer framing portion 14 of the tray main part 11 from the bottom side thereof as stated above up to a point where an upper part of the main portion 12a of the supporting frame 12 comes into contact with bottom ends of the reinforcing ribs 14c, the hookup protrusions 14a formed on the outer framing portion 14 of the tray main part 11 fit into the mating holes 12d formed in the right-hand hollow straight section of the main portion 12a of the supporting frame 12. The fixing bolts 18 are tightened into the mating holes 12d formed in the left-hand hollow straight section of the main portion 12a of the supporting frame 12 as illustrated in FIG. 6, whereby the tray main part 11 is secured to the supporting frame 12. In this structure of the embodiment, the hookup protrusions 14a and the fixing bolts 18 together constitute fixing parts.

As illustrated in FIGS. 5 and 6, the supporting frame 12 is fitted with brackets 19 made of shaped wires for supporting the tray main part 11 with part of the bottom of the tray main part 11 located inside the supporting frame 12 lying on the wire frames 19. Each of these wire frames 19 has a pair of fixing parts located at both ends which are attached to the bottom of the main portion 12a of the supporting frame 12 and a generally horizontal central arm projecting inward from the main portion 12a. The tray main part 11 is supported by the wire frames 19 with the bottom of the tray main part 11 held in contact with the projecting arms of the wire frames 19.

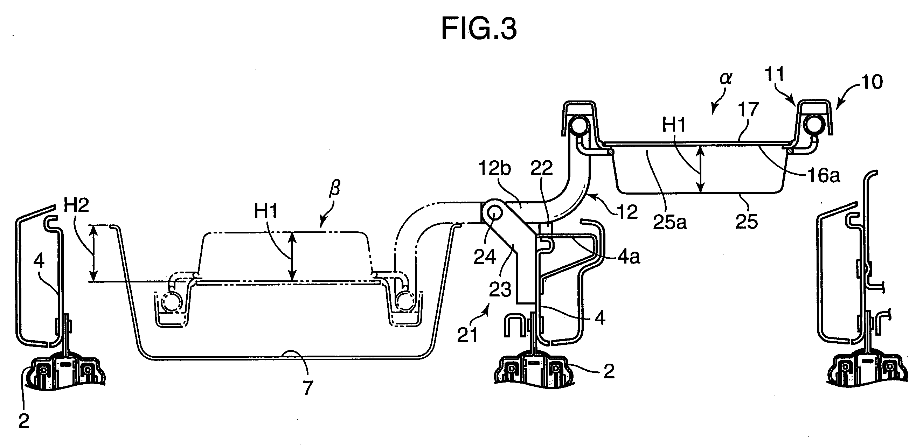

A net bag 25 having an upper opening serving as a utility storage container is provided underneath the tray 10. Upper edges of the net bag 25 along an opening 25a at the upper end of the net bag 25 are placed in the outer framing portion 14 of the tray main part 11 and clamped between the outer framing portion 14 and the supporting frame 12. The net bag 25 fitted to the tray 10 in this way hangs from the tray 10 as shown in FIG. 3. More specifically, the hookup protrusions 14a and the fixing bolts 18 together constituting the fixing parts are passed through meshes of the net bag 25 or hooking slits formed therein, whereby the upper opening 25a of the net bag 25 is fixed to the outer framing portion 14 of the tray main part 11.

The height H1 of the net bag 25 constituting the utility storage container from the upper opening 25a to the bottom of the net bag 25 is made smaller than the height H2 of the tray compartment 7 from an upper end thereof to the opening 25a of the net bag 25 as measured when the tray 10 is retracted to its storage position β as shown in FIG. 3. A seat-side member 4a is fitted to the outside of the left-hand (right-hand as illustrated in FIG. 3) slide member 4 of the right-hand second-row seat 32, and a cushion pad 22 made of synthetic rubber, for example, is attached to a top surface of the seat-side member 4a. When the tray 10 is folded out to its service position α, the arms 12b of the supporting frame 12 rest on the cushion pad 22 of the seat-side member 4a in direct contact therewith.

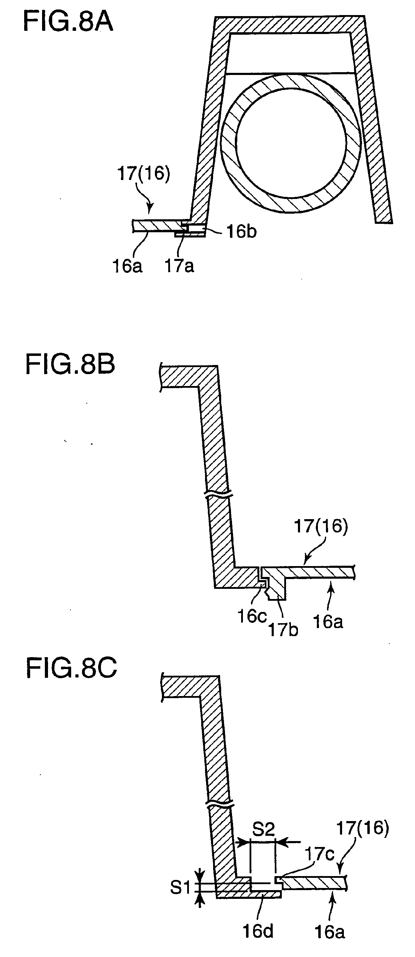

At the middle of a rear side of the through hole 16a formed at the flat portion 16 of the tray main part 11, there is formed a slit 16b in the outer framing portion 14, and a ridge 17a formed on a rear end of the cover plate 17 is fitted into this slit 16b (refer to FIG. 8A). Also, on a front side of the through hole 16a at the flat portion 16 of the tray main part 11, there are formed stepped ridges 16c projecting rearward from portions of the front side of the through hole 16a, and not from a middle portion thereof, and locking parts 17b formed on a front end of the cover plate 17 fit onto the stepped ridges 16c on the front side of the through hole 16a at the flat portion 16 of the tray main part 11 (refer to FIG. 8B). When the ridge 17a formed on the cover plate 17 is inserted into the slit 16b formed at the flat portion 16 of the tray main part 11 and the locking parts 17b of the cover plate 17 are mated with the stepped ridges 16c on the front side of the through hole 16a at the flat portion 16 of the tray main part 11, the cover plate 17 is locked in position closing the through hole 16a.

As shown in FIG. 8C, there is formed a projection 16d at the bottom of the outer framing portion 14 of the tray main part 11 extending rearward from the middle of the front side of the through hole 16a with a cutout formed just above the projection 16d for creating a clearance S2 between the outer framing portion 14 and the front end of the cover plate 17. Further, there is formed a hang-on part 17c extending flush with a top surface of the cover plate 17 from the middle of the front end thereof, the hang-on part 17c facing the projection 16d of the outer framing portion 14 with a clearance S1 in between. This arrangement makes it possible to easily lift the front end of the cover plate 17 with a fingertip inserted into a space created by the clearances S1 and S2 and remove the cover plate 17 upon releasing the locking parts 17b of the cover plate 17 from the stepped ridges 16c at the front side of the through hole 16a in the flat portion 16 of the tray main part 11.

As illustrated in the foregoing discussion, the structure of the embodiment includes the seat cushion 3, the tray compartment 7 provided underneath the seat cushion 3, the tray 10 storable in the tray compartment 7 and the seat cushion swing mechanism 20 which makes it possible to expose the top side of the tray compartment 7 by swinging up the seat cushion 3 about the support shaft 6 at one end of the seat cushion 3. The tray support 21 sustains the tray 10 in such a manner that the tray 10 can be moved between the service position α and the storage position β in the tray compartment 7 located under the seat cushion 3 under conditions where the top side of the tray compartment 7 is exposed with the seat cushion 3 swung up as shown by the imaginary lines in FIG. 2. Since this tray support 21 is attached to the seat-equipped mechanical member, or the left-hand slide member 4 of the seat unit 1 of FIG. 2, the tray 10 can be pulled out to the service position α on the left side of the seat cushion 3 whenever it is desired to place articles on the tray 10. When it is not necessary to use the tray 10, the tray 10 can be stowed back to the storage position β in the tray compartment 7 so that a free space is created on the left side of the seat cushion 3, thereby providing an improved walk-through capability for passengers.

The structure of the aforementioned embodiment is provided with the utility storage container made of the net bag 25 which has an upper opening and hangs from the tray 10 when the tray 10 is set in the storage position β, the through hole 16a joining the upper opening of the net bag 25 to a space above the tray 10, and the cover plate 17 which covers or uncovers the through hole 16a. This arrangement of the embodiment makes it possible to place and take out articles in and from the net bag 25 through the through hole 16a upon lifting up the cover plate 17 when the tray 10 is in the service position α. This arrangement is also advantageous in that the cover plate 17 can be used as a platform for holding various articles when set in position to cover the through hole 16a.

According to the foregoing embodiment, the recess 15 for holding beverage receptacles and the flat portion 16 for holding articles are located in separate areas and the flat portion 16 of the tray main part 11 is formed by the removable cover plate 17. This structure enables a passenger to place and take out articles in and from the net bag 25 upon lifting up the cover plate 17 without accidentally touching the beverage receptacles held in the recess 15 and spilling their contents. The structure of the embodiment also enables the passenger to easily place and remove the beverage receptacles in and from the recess 15 regardless of whether the cover plate 17 is set in position or not.

According to the foregoing embodiment, the tray 10 includes the tray main part 11 having the recess 15 for holding beverage receptacles and the flat portion 16 for holding articles as well as the supporting frame 12 to which the tray main part 11 is fixed by means of the fixing parts including the hookup protrusions 14a and the fixing bolts 18, and the net bag 25 constituting the utility storage container is attached to the tray 10 by the aforementioned fixing parts. This structure of the embodiment is advantageous in that the net bag 25 constituting the utility storage container can be compactly stored in the tray compartment 7 with ease when it is not necessary to use the tray 10. The structure of the embodiment is also advantageous in that the tray main part 11 can be attached to the supporting frame 12 without the need for any dedicated fixtures and the utility storage container made of the net bag 25 can be attached to the tray 10 with a simple arrangement.

Furthermore, the supporting frame 12 is fitted with the wire frames 19 for supporting the tray main part 11 located inside the supporting frame 12 in the foregoing embodiment. This arrangement is advantageous in that the stiffness of the supporting frame 12 can be effectively increased by a simple structure so that the supporting frame 12 can support the tray main part 11 in a stable manner

Moreover, the utility storage container is made of a pouchlike flexible container similar to the net bag 25 and the height H1 of the net bag 25 from the upper opening 25a to the bottom of the net bag 25 is made smaller than the height H2 of the tray compartment 7 from the upper end thereof to the opening 25a of the utility storage container (net bag 25) as measured when the tray 10 is retracted to its storage position β in the foregoing embodiment. This arrangement ensures that the bottom of the utility storage container would not project from the tray compartment 7 beyond the upper end thereof when the tray 10 is stowed in the tray compartment 7 with the utility storage container attached to the tray 10. Therefore, the arrangement serves to effectively prevent the bottom of the utility storage container from being caught between the top of the tray compartment 7 and the bottom of the seat cushion 3.

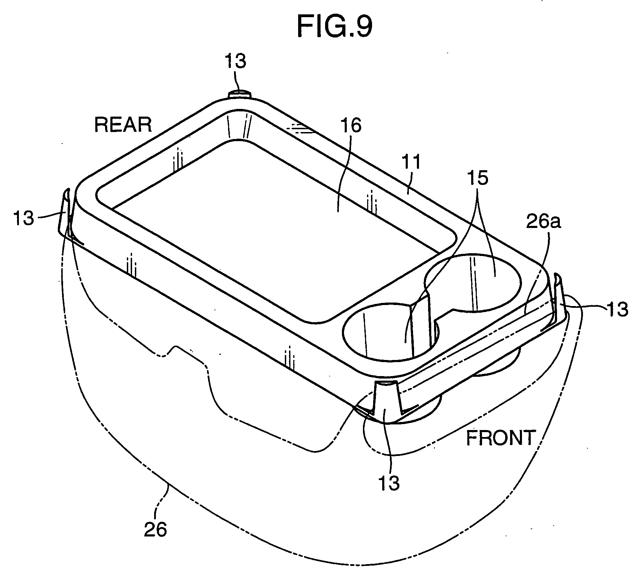

According to the invention, the present embodiment may be modified such that the seat unit 1 employs, instead of the aforementioned arrangement in which the utility storage container made of the net bag 25 is attached to the tray 10 by means of the fixing parts including the hookup protrusions 14a and the fixing bolts 18, an arrangement in which an utility storage container made of a pouchlike flexible container is attached to the tray 10 by means of the hooks 13 formed on an outer periphery of the tray main part 11. For example, a flexible container 26, such as a plastic shopping bag, may be suspended from the tray main part 11 to cover the bottom side of the tray 10 with hooking parts 26a of the flexible container 26 (handles of the shopping bag) provided at an upper end thereof hooked on the hooks 13 located at the four corners of the tray main part 11 as shown in FIG. 9. This alternative arrangement is advantageous in that a widely available shopping bag suspended from the tray 10 can be used as a waste disposal bag which can be easily removed whenever desired.

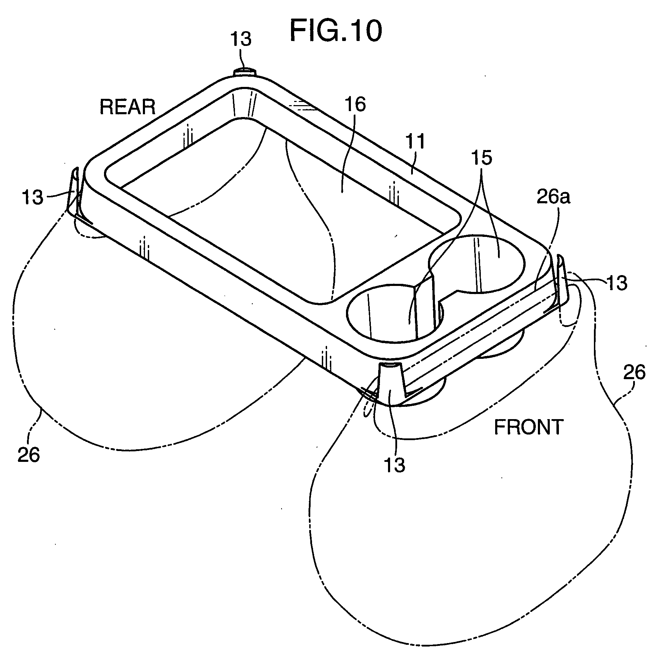

The present embodiment may also be modified such that the seat unit 1 employs, instead of the aforementioned arrangement in which the single flexible container 26 is attached to the tray main part 11 to cover the bottom side of the tray 10, an arrangement in which two or more flexible containers 26, such as plastic shopping bags, are suspended from the front and rear of the tray 10 as shown in FIG. 10, for instance. As previously mentioned, the tray 10 has the through hole 16a joining the top and bottom sides of the tray 10 and the cover plate 17 which covers or uncovers the through hole 16a and the hooks 13 are formed on the outer periphery of the tray main part 11. This arrangement is advantageous in that widely available shopping bags or the like can be suspended from desired positions by attaching hooking parts (handles) 26a of the flexible containers 26 to the hooks 13 when necessary and easily removed.

While the through hole 16a joining the top and bottom sides of the tray 10 is formed in an almost entire area of the flat portion 16 of the tray main part 11 in the foregoing embodiment, the location and the size of the through hole 16a are not limited to this structure of the embodiment but may be modified in various ways. As an example, the seat unit 1 may employ a structure in which a trough hole joining the top and bottom sides of the tray 10 is formed in part of the entire area of the flat portion 16 and a cover plate for covering and uncovering the trough hole is placed on the tray 10.

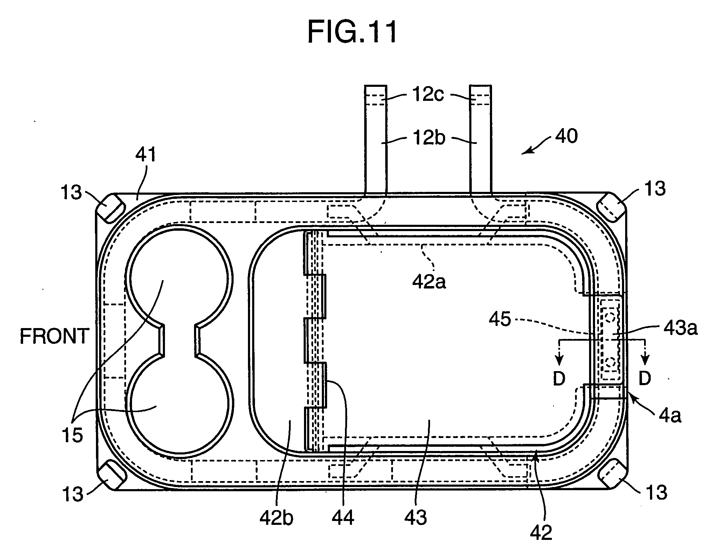

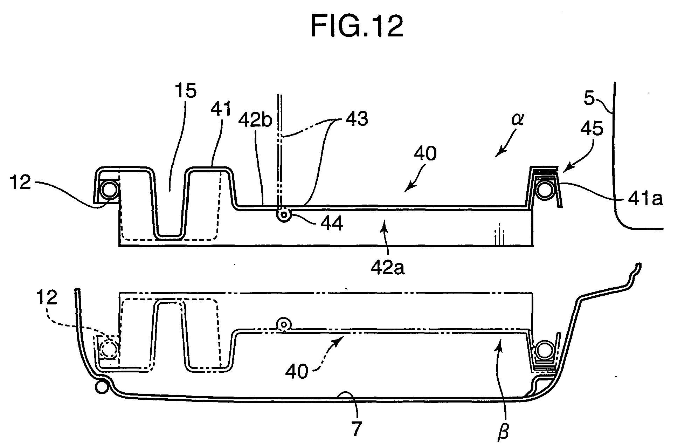

FIGS. 11, 12 and 13 are diagrams showing a seat unit 1 according to another form of embodiment of the invention. The seat unit 1 of this embodiment is equipped with a tray 40 of which cover plate 43 provided at a flat portion 42 of a tray main part 41 can be opened and closed by means of a pair of hinges 44. Specifically, a through hole 42a joining the top and bottom sides of the tray 40 except for a front part 42b of the flat portion 42 is formed in the flat portion 42 of the tray main part 41, and the cover plate 43 for covering and uncovering the through hole 42a is supported swingably about the hinges 44 located at a front end of the cover plate 43.

The cover plate 43 has at its rear end a finger-operated tab 43a which lies on a rearmost end of an outer framing portion 41a of the tray main part 41 as well as a retainer 45 which is located between the finger-operated tab 43a and the outer framing portion 41a of the tray main part 41. The retainer 45 includes a permanent magnet 45a affixed to a top surface of the outer framing portion 41a of the tray main part 41 and a piece of ferromagnetic substance 45b, such as a flat steel bar, affixed to a bottom surface of the finger-operated tab 43a so that the cover plate 43 is normally held in its closed position by a magnetic force exerted by the permanent magnet 45a.

According to the aforementioned structure of this embodiment, the cover plate 43 can be moved to its upper open position by lifting the finger-operated tab 43a of the cover plate 43 from its closed position to release the ferromagnetic piece 45b from the permanent magnet 45a and swinging up the cover plate 43 about the hinges 44. The structure of this embodiment is advantageous in that when the tray 40 is set to its storage position β with the through hole 42a closed by the cover plate 43, the cover plate 43 is held in its closed position by the magnetic force exerted by the permanent magnet 45a.

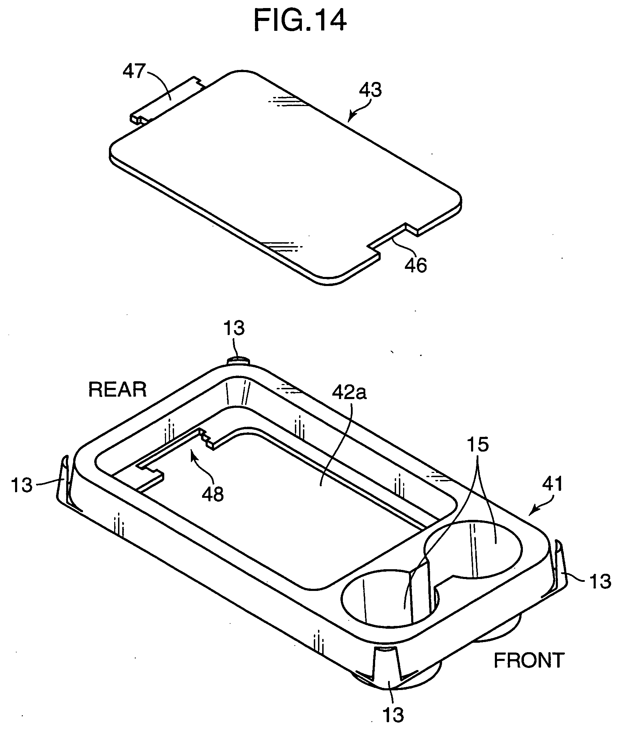

According to the invention, the present embodiment may be modified such that the seat unit 1 employs, instead of the aforementioned arrangement in which the cover plate 43 is swingably supported by the hinges 44, an arrangement shown in FIG. 14 in which the cover plate 43 for covering and uncovering the through hole 42a in the tray main part 41 has a finger-operated part 46 formed at a free end (front end) of the cover plate 43 that is used when opening the cover plate 43 and a supporting tab 47 formed at a fixed end (rear end) of the cover plate 43 that serves as a pivot shaft about which the cover plate 43 is swung up and down, and a tab fitting part 48 is formed in the tray main part 41 such that the supporting tab 47 of the cover plate 43 can be detachably fitted to the tab fitting part 48 of the tray main part 41.

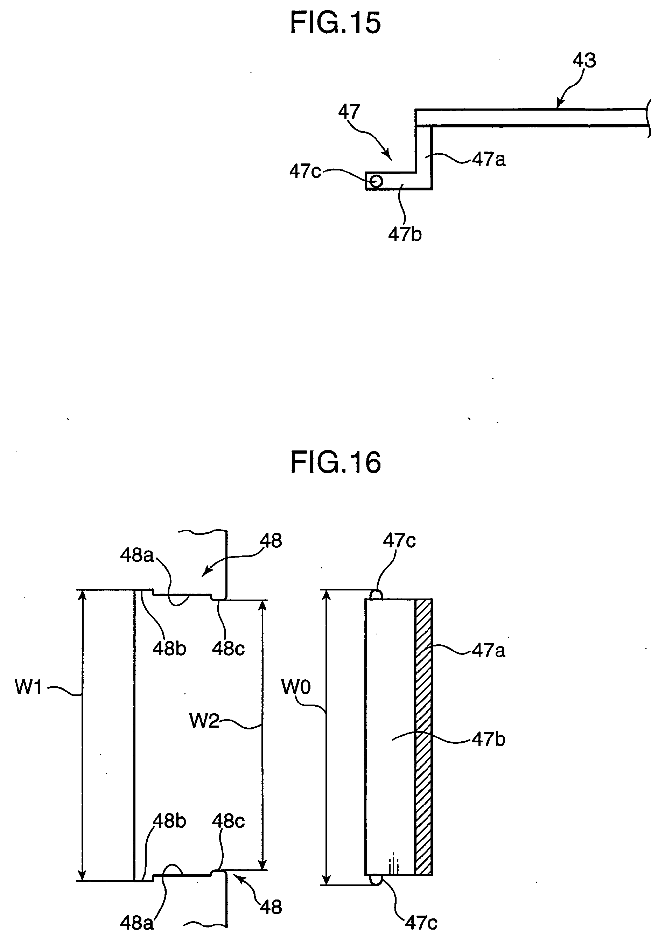

Shaped as illustrated in FIGS. 15 and 16, the supporting tab 47 of the cover plate 43 according to the aforementioned varied form of the embodiment has a vertical portion 47a extending downward from the fixed end of the cover plate 43, a horizontal portion 47b extending horizontally frontward from a lower end of the vertical portion 47a and a pair of hemispherical protrusions 47c formed on both left and right end surfaces of the horizontal portion 47b. On the other hand, the tab fitting part 48 formed in the tray main part 41 has a tab fitting opening 48a having a width corresponding to the width of the vertical portion 47a and the horizontal portion 47b of the supporting tab 47, a pair of left and right cut portions 48b formed at a rear end of the tab fitting opening 48a and a pair of left and right protruding stopper portions 48c jutting out inward from a front end of the tab fitting opening 48a. The distance W1 between the left and right cut portions 48b is made a little larger than the distance W0 between the left and right protrusions 47c, and the distance W2 between the left and right protruding stopper portions 48c is made a little smaller than the distance W0 between the two protrusions 47c.

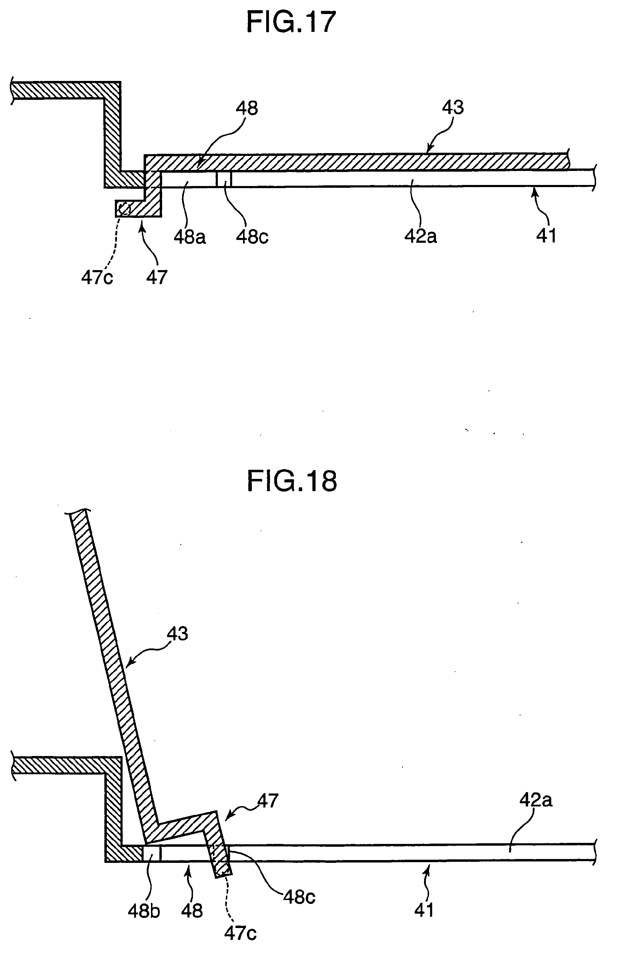

The cover plate 43 structured as explained above is fitted to the tray main part 41 as follows. After passing the protrusions 47c formed on the left and right end surfaces of the supporting tab 47 of the cover plate 43 downward between the cut portions 48b of the tab fitting part 48 of the tray main part 41 from above, the cover plate 43 is placed on the tray main part 41 as shown in FIG. 17 so that the cover plate 43 closes the through hole 42a in the tray main part 41. Then, the cover plate 43 is moved to its open position as shown in FIG. 18 by lifting and swinging the free end of the cover plate 43 with a fingertip hooked on the finger-operated part 46. When the cover plate 43 is turned to the open position, the protrusions 47c on the left and right end surfaces of the horizontal portion 47b of the supporting tab 47 go into contact with the left and right protruding stopper portions 48c formed at the tab fitting part 48, whereby the cover plate 43 is held at the open position.

The cover plate 43 can be removed from the tray main part 41 by lifting the cover plate 43 so that the protrusions 47c formed on the left and right end surfaces of the supporting tab 47 of the cover plate 43 pass through the tab fitting part 48 upward from below the tray main part 41 to a space above the through hole 42a reversing the aforementioned procedure used when fitting the cover plate 43. The aforementioned structure in which the supporting tab 47 of the cover plate 43 is detachably fitted into the tab fitting part 48 of the tray main part 41 is advantageous in that an entire area of the through hole 42a can be held open by removing the cover plate 43 from the tray main part 41 and storing the cover plate 43 in a specified location when the cover plate 43 is not necessary. The cover plate 43 can also be removed from the tray main part 41 by further turning the cover plate 43 in its opening direction from the open position shown in FIG. 18, causing the protruding stopper portions 48c of the tab fitting part 48 to elastically deform and the protrusions 47c of the supporting tab 47 to be released from the protruding stopper portions 48c, instead of lifting the cover plate 43 upward as discussed above.

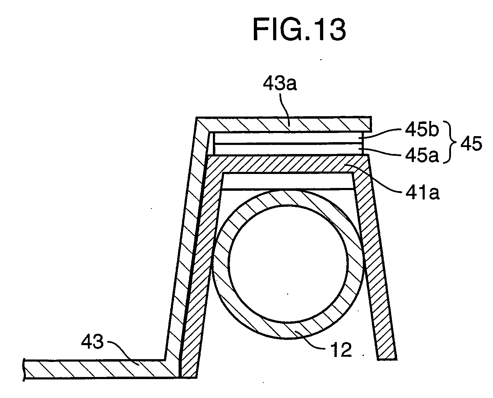

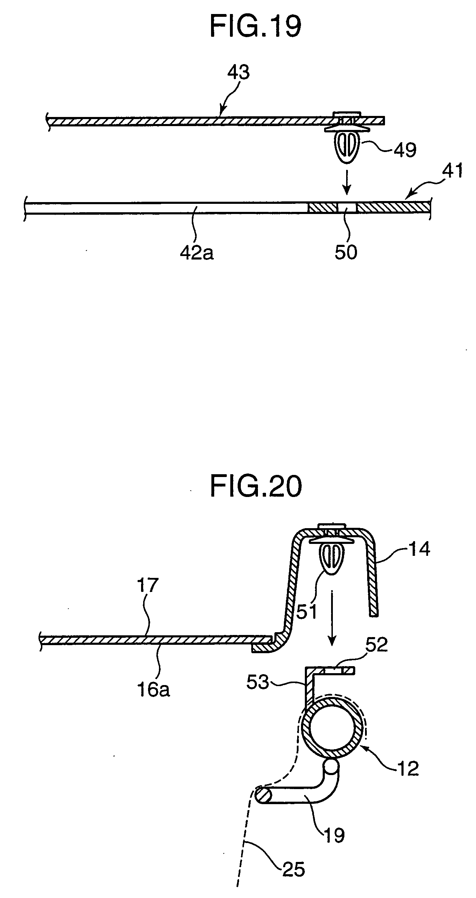

The present embodiment may also be modified such that the seat unit 1 employs, instead of the aforementioned arrangement (FIG. 13) in which the cover plate 43 is held in the closed position by the magnetic force exerted by the permanent magnet 45a, an arrangement in which the cover plate 43 is fitted with a snap-in clip 49 located near the free end of the cover plate 43 and detachably locked in the closed position by forcing the snap-in clip 49 into a retaining hole 50 formed in the tray main part 41 as shown in FIG. 19.

Also, the foregoing embodiment may be modified such that the seat unit 1 employs, instead of the aforementioned arrangement (FIG. 6) in which the tray main part 11 is fixed to the supporting frame 12 and the net bag 25 is attached to the tray 10 by the fixing parts including the hookup protrusions 14a and the fixing bolts 18, an arrangement in which snap-in clips 51 are fitted in the outer framing portion 14 of tray main part 11 and upward projecting retaining brackets 53 individually having retaining holes 52 are affixed to upper parts of the supporting frame 12 as shown in FIG. 20, whereby the tray main part 11 is fixed to the supporting frame 12 and the net bag 25 is attached to the tray 10 by fixing parts including the snap-in clips 51 and the retaining brackets 53 with the net bag 25 hanging from the tray 10. More specifically, with the retaining brackets 53 passed through meshes of the net bag 25 or hooking slits formed therein, the snap-in clips 51 are forced into the retaining holes 52 formed in the individual retaining brackets 53 so that the tray main part 11 is fixed to the supporting frame 12 and the net bag 25 is attached to the tray 10 at the same time.

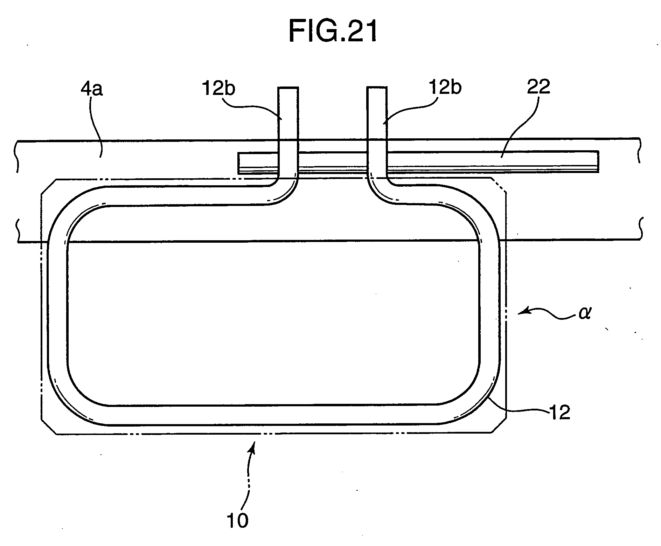

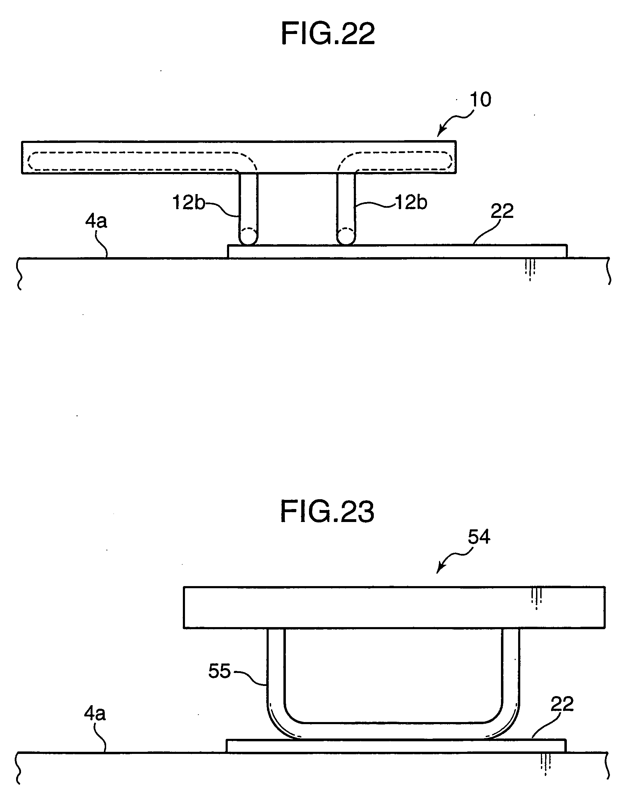

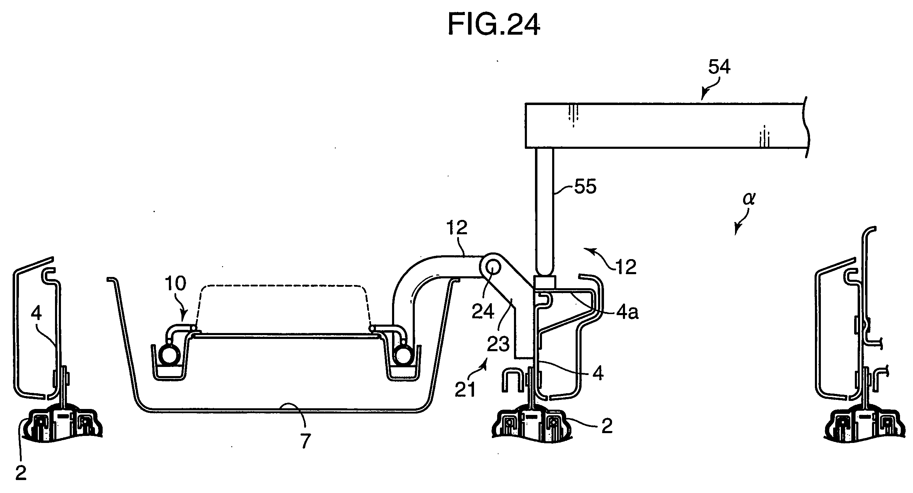

Furthermore, the seat unit 1 of the foregoing embodiment may be structured such that the cushion pad 22 attached to the top surface of the seat-side member 4a for the supporting frame 12 shown in FIGS. 3, 21 and 22 is used also as a support for an in-vehicle facility 54, such as an auxiliary seat or a side table disposed between the left and right second-row seats 32 as shown in FIGS. 23 and 24. More particularly, the cushion pad 22 of this variation covers an area where the arms 12b of the supporting frame 12 lie when the tray 10 is set in the service position α as shown in FIG. 22 as well as an area where a leg 55 of the in-vehicle facility 54 lies when the in-vehicle facility 54 is set in its service position, so that the cushion pad 22 serves as a resilient support for both the tray 10 and the in-vehicle facility 54. This arrangement is advantageous in that the tray 10 or the in-vehicle facility 54, whichever used, can be supported in a stable fashion with a sufficient cushioning effect with a simple structure.

While the foregoing discussion has illustrated the preferred embodiment of the invention and the variations thereof, by way of example, with reference to the seat unit 1 of which right-hand second-row seat 32 is equipped with the tray 10 of the invention, the invention is not limited to this structure. For example, a tray of the invention may be provided at the left-hand second-row seat 32, the left-hand first-row seat 31 or the right-hand first-row seat 31. Also, the bench-style third-row seat 33 may replaced by left and right bucket seats with a tray of the invention provided at the left-hand or right-hand third-row seat.

While the foregoing discussion has illustrated an example of implementation of the invention in which the seat cushion 3 is swung up about the support shaft 6 located at the front of the seat cushion 3, the seat unit 1 may be modified such that the seat cushion 3 can be swung up about a support shaft provided at the rear of the seat cushion 3 or on the side of the seat cushion 3 opposite to the side of the service position α of the tray 10 (40) to expose the top side of the tray compartment 7. Also, the seat cushion swing mechanism 20 may be provided with a biasing member for forcing the seat cushion 3 upward so that the seat cushion 3 once released from its normal position for exposing the top side of the tray compartment 7 automatically swings up with the aid of an upward biasing force exerted by the biasing member.

Furthermore, the foregoing embodiment may be modified such that the seat unit 1 employs, instead of the aforementioned arrangement in which the seat cushion 3 is made swingable about the support shaft 6 or an equivalent thereof for exposing the top side of the tray compartment 7, an arrangement in which the top side of the tray compartment 7 is exposed by removing the seat cushion 3 from the guide rails 2.

In the foregoing embodiment, the seat unit 1 having the seat cushion 3, the tray compartment 7 located beneath the seat cushion 3 and the tray 10 storable in the tray compartment 7 is structured such that the seat cushion 3 can be moved between a first position at which the top side of the tray compartment 7 is exposed and a second position at which the top side of the tray compartment 7 is closed and the tray 10 can be moved between the service position β at which the tray 10 is stored in the tray compartment 7 and the service position α at which the tray 10 is located on one side of the seat cushion 3. This structure is advantageous in that it is possible to efficiently provide an improved walk-through capability on the side of the seat cushion 3 by storing the tray 10 in the tray compartment 7 when the tray 10 is not necessary.

In summary, a seat unit according to the present invention includes a seat cushion, a tray compartment located under the seat cushion, a tray which is made storable in the tray compartment, a seat cushion swing mechanism which makes it possible to expose the top side of the tray compartment by swinging up the seat cushion about a support shaft provided at one end of the seat cushion, and a tray support provided on a seat-side member for supporting the tray in such a manner that the tray can be moved between a storage position inside the tray compartment and a service position on one side of the seat cushion after swinging up the seat cushion.

In this structure, the tray supported by the tray support can be folded out to the service position located on one side of the seat cushion with the top side of the tray compartment exposed by swinging up the seat cushion about the support shaft provided at one end of the seat cushion so that the tray can be used as a platform for holding various articles when necessary. When it is not necessary to use the tray, the tray can be stowed back to the storage position located under the seat cushion so that a free space is created on one side of the seat cushion to provide an improved walk-through capability for passengers.

In one feature of the invention, a storage container having an upper opening is attached to the tray in such a manner that the storage container hangs from the tray when the tray is set at the service position, and the tray has a through hole joining the upper opening of the storage container to a space above the tray and a cover plate by which the through hole can be covered and uncovered.

The seat unit thus structured is advantageous in that, with the tray set in the service position, passengers can place and take out articles in and from the storage container through the through hole in the tray when the cover plate is opened and use the cover plate as a platform for holding various articles when the through hole is closed by the cover plate.

In anther feature of the invention, the tray has a recess for holding one or more beverage receptacles and a flat portion for holding miscellaneous articles, the cover plate being disposed at the flat portion of the tray.

According to this feature of the invention, the aforementioned recess for holding beverage receptacles and the flat portion for holding miscellaneous articles are provided in separate areas of the tray. This structure is advantageous in that a passenger can place and take out articles in and from the storage container upon lifting up the cover plate at the flat portion of the tray without accidentally touching the beverage receptacles and spilling their contents.

In anther feature of the invention, the tray includes a tray main part having the aforementioned recess and flat portion and a supporting frame to which the tray main part is fixed by fixing parts, and the storage container is made of a net bag which is attached to the tray by means of the fixing parts.

According to this structure, the aforementioned storage container made of a net bag can be compactly stored with ease when the tray is not necessary. In addition, the net bag can be easily attached to the tray by using the fixing parts for fixing the tray main part to the supporting frame, without the need for any dedicated fixing device.

In anther feature of the invention, the aforementioned supporting frame of the tray has wire frames for supporting the tray main part located inside the supporting frame with the bottom of the tray main part lying on the wire frames.

With this arrangement, the tray main part located inside the supporting frame can be supported by the aforementioned wire frames having a simple structure. Additionally, the provision of the wire frames effectively increases the stiffness of the supporting frame.

In anther feature of the invention, the aforementioned storage container is made of a flexible container having a plurality of hooking parts, and the tray has hooks on which the hooking parts of the flexible container are hooked.

This arrangement is advantageous in that the storage container made of a flexible container can be suspended from the tray with the hooking parts of the flexible container hooked on the hooks of the tray so that the flexible container can be used for storing goods and easily removed from the tray when desired.

In anther feature of the invention, the aforementioned tray has a through hole joining the top and bottom sides of the tray and a cover plate by which the through hole can be covered and uncovered, and a plurality of hooks are provided on an outer periphery of the tray.

According to this feature of the invention, a flexible container like a plastic shopping bag can be used for storing goods by hooking handles of the flexible container on the aforementioned hooks when the tray is set to the service position.

In still anther feature of the invention, the aforementioned cover plate has a finger-operated part at one end and a supporting tab at the opposite end so that the cover plate can be swung up and down about the supporting tab, and the tray is provided with a tab fitting part to which the aforementioned supporting tab of the cover plate can be detachably fitted.

According to this feature of the invention, it is possible to open the through hole in the tray by swinging up the cover plate by lifting the finger-operated part thereof when the tray is set to the service position. It is also possible to keep the through hole uncovered by removing the cover plate from the tray when desired.

In yet anther feature of the invention, the storage container is made of a flexible container, and the height of the flexible container from the upper opening to the bottom of the flexible container is made smaller than the height of the tray compartment from an upper end thereof to the opening of the flexible container.

This arrangement is advantageous in that the bottom of the flexible container would not project from the tray compartment beyond the upper end thereof when the tray is stowed in the tray compartment with the storage container made of the flexible container attached to the tray. Also, this arrangement serves to effectively prevent the bottom of the storage container from being caught between the upper end of the tray compartment and the bottom of the seat cushion.

Another seat unit of the present invention includes a seat cushion, a tray compartment located under the seat cushion, and a tray which is made storable in the tray compartment. In this seat unit, the seat cushion is supported in such a manner that the seat cushion can be moved between a first position at which the top side of the tray compartment is exposed and a second position at which the top side of the tray compartment is closed, and the tray can be moved between a storage position at which the tray is stored in the tray compartment and a service position at which the tray is located on one side of the seat cushion.

In this structure, the tray stowed in the storage position can be folded out to the service position located on one side of the seat cushion with the top side of the tray compartment exposed by swinging up the seat cushion, so that the tray can be used as a platform for holding various articles when necessary. When it is not necessary to use the tray, the tray can be stowed back to the storage position located under the seat cushion so that a free space is created on one side of the seat cushion to provide an improved walk-through capability for passengers.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A seat unit comprising:
a seat cushion (3);
a tray compartment (7) provided under said seat cushion (3);
a tray (10) being storable in said tray compartment (7);
a seat cushion swing mechanism (20) for swinging up said seat cushion (3) about a support shaft (24) provided at one end of said seat cushion (3) to expose the top of said tray compartment (7); and
a tray support (21) provided on a seat-side member (4a) for supporting said tray (10) in such a manner that said tray (10) is movable between a storage position (β) inside said tray compartment and a service position (α) on one side of said seat cushion (3) after swinging up said seat cushion (3).

2. The seat unit according to claim 1, wherein a storage container (25, 26) with an upper opening is attached to said tray (10) in such a manner that the storage container (25, 26) hangs from said tray (10) when said tray (10) is set at the service position (α), and said tray (10) is provided with a through hole (42a) joining the upper opening of the storage container (25, 26) to a space above said tray (10) and said tray (10) has a cover (17, 43) by which the through hole (42a) can be covered and uncovered.

3. The seat unit according to claim 2, wherein said tray (10) has a recess (15) for holding a beverage receptacle and a flat portion (16) for holding miscellaneous articles, said cover (17) being disposed at the flat portion (16).

4. The seat unit according to claim 3, wherein said tray (10) includes a tray main part (11) having said recess (15) and said flat portion (16) and a supporting frame (12) to which the tray main part (11) is fixed by a fixing part (14a, 18/51, 53), and the storage container is made of a net bag (25) which is attached to said tray (10) by means of said fixing part.

5. The seat unit according to claim 4, wherein the supporting frame (12) of said tray (10) has a wire frame (19) for supporting the tray main part (11) located inside the supporting frame (12) with the bottom of the tray main part (11) lying on the wire frame (19).

6. The seat unit according to claim 2 or 3, wherein the storage container is made of a flexible container (26) having a plurality of hooking parts, and said tray has hooks (13) on which the hooking parts of the flexible container are hooked.

7. The seat unit according to claim 1, wherein said tray has a through hole (42a) joining the top and bottom sides of said tray and a cover (43) by which the through hole can be covered and uncovered, and a plurality of hooks (13) are provided on an outer periphery of said tray (10).

8. The seat unit according to claim 2 or 3, wherein the cover (43) has a finger-operated part (46) at one end and a supporting tab (47) at the opposite end so that the cover (43) can be swung up and down about the supporting tab (47), and said tray (10) is provided with a tab fitting part (48) to which the supporting tab (47) of the cover (43) can be detachably fitted.

9. The seat unit according to claim 2, wherein the storage container is made of a flexible container (25), and the height (H1) of the flexible container (25) from the upper opening to the bottom of the flexible container is made smaller than the height (H2) of said tray compartment (7) from an upper end thereof to the opening of the flexible container when said tray (10) is set to the storage position (β) thereof.
